# FASCICULE DE BREVET EUROPEEN

(11) **EP 2 045 933 B1**
(45) Date de publication et mention de la délivrance du brevet: **28.07.2010**
(21) Numéro de dépôt: 08290927.6
(22) Date de dépôt: 02.10.2008
(51) Int. Cl.: H04B 7/26

(54) **Procédé de transmission de phonie et de données entre plusieurs utilisateurs**
Verfahren zur Sprach- und Datenübertragung zwischen mehreren Benutzern
Method of transmitting voice and data between several users

(30) Priorité: 03.10.2007 FR 0706918; 30.06.2008 FR 0803647
(43) Date de publication de la demande: 08.04.2009
(73) Titulaire: NEXTER Systems, 42328 Roanne Cedex (FR)
(72) Inventeur: Oresve, Bertrand, 18023 Bourges Cedex (FR)
(74) Mandataire: Célanie, Christian

(56) Documents cités:
- EP-A- 0 740 429
- EP-A- 1 207 637
- WO-A-99/31827
- US-B1- 6 711 144

## Description

Le domaine technique de l'invention est celui des procédés et dispositifs permettant la transmission simultanée de phonie et de données entre plusieurs utilisateurs au travers d'un réseau de télécommunications radio "half duplex".

Les réseaux de télécommunication radio "half duplex" sont utilisés notamment dans le domaine militaire. Ils ont pour caractéristique de mettre en oeuvre des protocoles de communication dans lesquels il y a une alternance des émissions et des réceptions. Un utilisateur du réseau peut ainsi occuper le canal de transmission pour émettre. Lorsqu'il a fini son émission il se positionne en situation d'attente d'une réponse et un autre utilisateur peut à son tour occuper le canal. La transmission se fait à chaque fois d'un utilisateur émetteur vers tous les autres utilisateurs qui sont récepteurs.

Le principal problème posé par les dispositifs classiques est qu'ils ne peuvent émettre simultanément des données et de la phonie. Ce problème est d'autant plus gênant que les réseaux de télécommunications militaires ont une faible bande passante utile (inférieure à 64 kbit/s) en raison de la mise en oeuvre de cryptage des émissions et de technologies d'évasion de fréquence qui imposent une synchronisation précise sur un poste maître.

Pour résoudre ce problème il a été proposé par EP1207637 de diviser le canal radio en alternant des créneaux temporels dédiés à la transmission de la phonie et des créneaux temporels dédiés à la transmission des données.

La phonie permet la communication vocale directe entre les différents utilisateurs. Un utilisateur donné qui prend la parole voit ainsi son message divisé entre les différents créneaux temporels successifs dédiés à la phonie. Lorsque son message est terminé, il libère la communication et les créneaux de phonie peuvent être occupés par un autre utilisateur.

La transmission de données vise par exemple les échanges de messages écrits ou la communication de fichiers de données, par exemple vidéo.

Lorsqu'un utilisateur souhaite envoyer des données il procède d'une façon analogue à celle mise en oeuvre pour transmettre la phonie. Il prend la ligne pour ce qui concerne les créneaux de données. Ces dernières se répartissent suivant les différents créneaux de données successifs. Lorsque la ligne est libérée, un autre utilisateur peut à son tour envoyer des données.

Même si ce procédé connu permet l'émission simultanée de phonie et de données il présente encore des inconvénients.

Il est en effet nécessaire d'assurer une synchronisation entre les différents utilisateurs, cela afin de pouvoir localiser temporellement les différents créneaux de phonie et de données. Pour assurer une telle synchronisation le procédé décrit par EP1207637 propose de mettre en oeuvre des créneaux spécifiquement dédiés aux informations de synchronisation. Ces créneaux dédiés occupent ainsi une partie de la bande passante disponible.

Concrètement les postes de radio des différents utilisateurs vont émettre de façon permanente des créneaux de synchronisation et cela même s'il n'y a pas d'émission de phonie ou de données.

Il en résulte un problème de discrétion de mise en oeuvre. En effet une émission, même brève, reste détectable et permet la localisation des émetteurs.

On connaît par ailleurs des dispositifs non multiplexés et dans lesquels il n'y a pas d'émission de synchronisation. Les postes émetteurs / récepteurs restent alors silencieux lorsqu'il n'y a aucun besoin d'échange.

Lorsqu'un poste souhaite émettre des données ou bien de la phonie il prend le réseau et assure son émission.

Dans ce cas il n'y a pas de multiplexage phonie / données possible. Il est uniquement possible de mettre en place des priorités d'émission à la phonie ou aux données selon les dispositifs.

C'est le but de l'invention que de proposer un procédé de transmission permettant de résoudre ces différents problèmes.

Ainsi le procédé selon l'invention assure une discrétion maximale pour les échanges tout en permettant un multiplexage phonie / données.

L'invention a pour objet un procédé de transmission de phonie et de données entre plusieurs utilisateurs (Uᵢ) au travers d'un réseau de télécommunications radio en "half duplex", procédé dans lequel on multiplexe temporellement la phonie et les données sous la forme d'une trame alternant des créneaux temporels dédiés à la transmission de la phonie et des créneaux temporels dédiés à la transmission des données, procédé caractérisé en ce que chaque utilisateur reste silencieux lorsqu'il n'a rien à émettre, et en ce que lorsqu'un utilisateur souhaite émettre de la phonie ou des données, il reste tout d'abord à l'écoute du réseau pendant une durée minimale pour détecter la présence d'un créneau de phonie ou de données émis par un autre utilisateur puis il synchronise temporellement ses futures émissions à partir de la détection du front montant ou descendant d'un créneau ainsi reçu d'un autre utilisateur.

Suivant une caractéristique, chaque utilisateur, lorsqu'il émet de la phonie (respectivement des données), réalise son émission sous la forme d'une série de créneaux séparés par des silences de largeur prédéfinie permettant ainsi à un autre utilisateur d'émettre au cours de ces silences des données (respectivement de la phonie).

Suivant une variante de réalisation, chaque utilisateur qui occupe pour la première fois le réseau après une période de silence peut choisir la largeur des créneaux de son émission de données, la somme de la durée du silence et de la durée du créneau de donnée qui suit le silence conservant par ailleurs toujours une valeur constante.

On pourra avantageusement définir au préalable une largeur de créneau optimale pour les données, et lorsque l'utilisateur qui occupe pour la première fois le réseau après une période de silence émet des données suivant une largeur de créneau supérieure à la largeur optimale, il peut ramener par la suite la largeur de ses émissions de données à la largeur optimale lorsqu'il détecte une émission de phonie dans les silences précédant ses émissions de données.

L'invention a également pour objet un dispositif de transmission de phonie et de données entre plusieurs utilisateurs (Uᵢ) au travers d'un réseau de télécommunications radio.

Ce dispositif met en oeuvre le procédé selon l'invention et il comprend au moins un poste de radio au niveau de chaque utilisateur ainsi qu'une interface de communication par phonie et un terminal de traitement de données. Ce dispositif est caractérisé en ce qu'il comporte un boîtier interface de multiplexage qui est interposé au niveau de chaque utilisateur entre le poste de radio d'une part et l'interface de communication et le terminal d'autre part, boîtier interface assurant un multiplexage temporel des données et de la phonie sous la forme d'une trame alternant des créneaux temporels dédiés à la transmission de la phonie et des créneaux temporels dédiés à la transmission des données, multiplexage assurant une émission de phonie (respectivement de données) sous la forme d'une série de créneaux séparés par des silences de largeur prédéfinie permettant ainsi à un autre utilisateur d'émettre au cours de ces silences des données (respectivement de la phonie), des moyens étant par ailleurs prévus pour synchroniser temporellement les émissions à partir de la détection du front montant ou descendant d'un créneau reçu d'un autre utilisateur.

L'invention sera mieux comprise à la lecture de la description qui va suivre d'un mode particulier de réalisation, description faite en référence aux dessins annexés et dans lesquels :
- la figure 1 schématise un dispositif de communication mettant en oeuvre le procédé selon l'invention,
- la figure 2 montre une trame d'un signal multiplexé temporellement selon l'art antérieur,
- la figure 3 montre une trame d'un signal multiplexé temporellement conformément au procédé selon l'invention,
- la figure 4 montre de façon schématique le positionnement des trames d'émission de deux utilisateurs sur le réseau,
- la figure 5 illustre ce positionnement des trames d'émission de deux utilisateurs dans le cadre d'une variante de réalisation de l'invention.

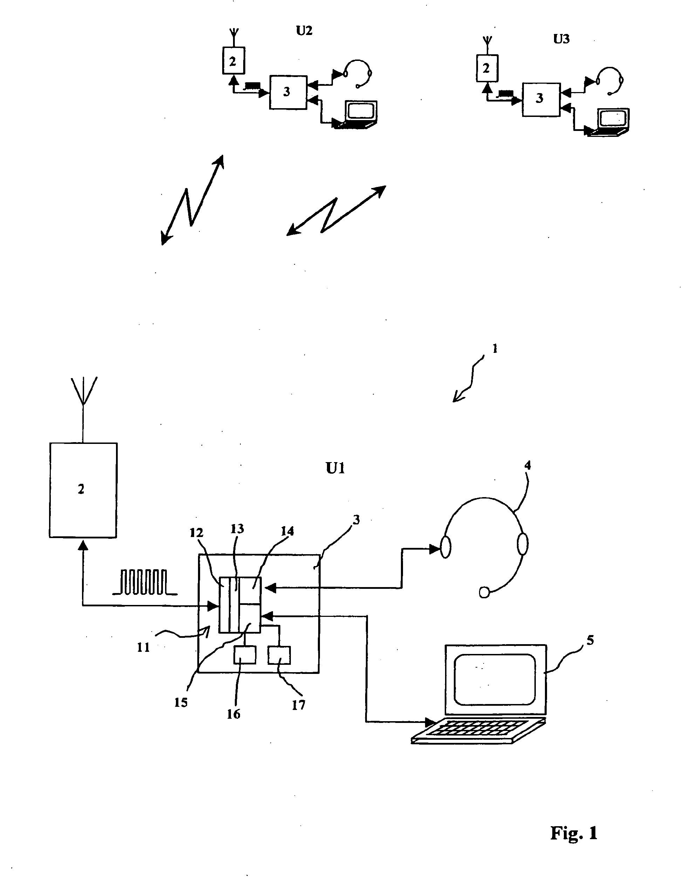

La figure 1 montre un réseau 1 de télécommunications radio entre trois utilisateurs U₁, U₂ et U₃ (le nombre d'utilisateurs n'est ici limité à trois qu'à titre d'exemple).

Chaque utilisateur Uᵢ est équipé d'un matériel analogue qui comprend un poste de radio 2 émetteur/récepteur, une interface de communication par phonie 4 et un terminal de traitement et de mise en forme de données 5, représenté ici sous la forme d'un micro ordinateur. L'interface de phonie 4 comprend d'une façon classique des écouteurs et un microphone ainsi qu'un commutateur de demande de prise de ligne phonie (non représenté).

Le terminal 5 et l'interface 4 sont reliés au poste de radio 2 par l'intermédiaire d'un boîtier interface de multiplexage 3 qui assure différentes fonctions.

Ce boîtier 3 renferme un calculateur 11 comportant un module 12 assurant la modulation et la démodulation des signaux émis ou reçus. Un autre module 13 assure la gestion des échanges et incorpore un ou plusieurs algorithmes permettant la synchronisation des données et la gestion des créneaux attribués à l'utilisateur.

Un module 14 gère plus particulièrement les signaux en phonie et en particulier le codage des messages qui sont émis et le décodage des messages qui sont reçus.

Le codage permet de numériser puis de compacter l'information phonie de façon à réduire sa bande passante. Les différents codages utilisables sont bien connus de l'Homme du Métier. On pourra par exemple utiliser le codage MELP.

Un autre module 15 gère les signaux de données émis et reçus.

Le calculateur 11 est couplé à une mémoire 16 qui stocke la valeur de la durée S des silences devant séparer les créneaux d'émission de phonie ou de données. Bien entendu la mémoire 16 pourrait être incorporée au terminal 5.

Le boîtier 3 assure principalement le multiplexage entre les informations à émettre : phonie (voix) et données fournies par le terminal 5. Il assure, de façon symétrique, le démultiplexage des données et de la voix reçues via le poste radio 2.

Une des difficultés rencontrées dans le cadre des échanges de données numériques par télécommunication radio multi-utilisateurs est le problème de la synchronisation des données.

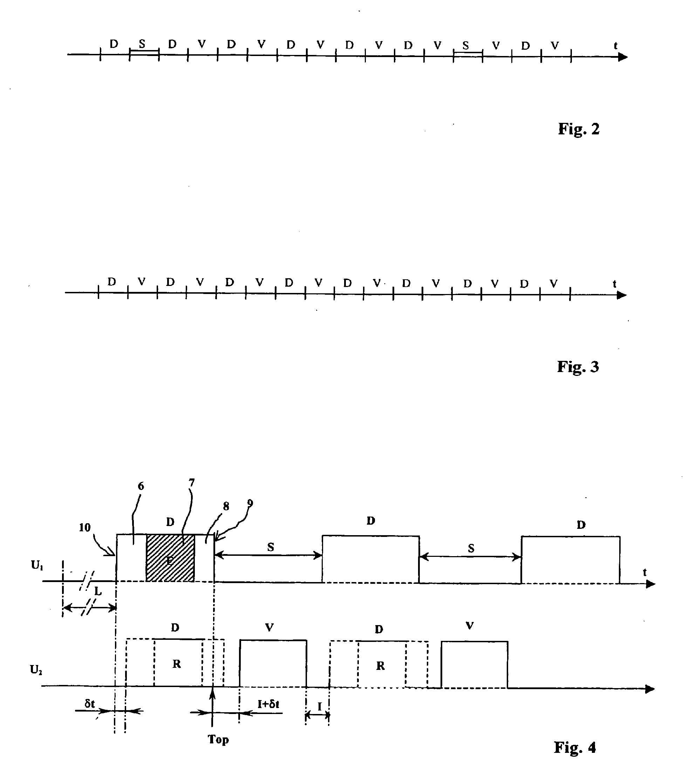

La figure 2 montre la trame d'un signal multiplexé selon le brevet EP1207637. On voit que sur une échelle temporelle (t) se succèdent d'une façon alternée des créneaux dédiés à la phonie (V) et des créneaux dédiés aux données D. Chaque créneau a une largeur de l'ordre de quelques dizaines de millisecondes. Sur cette échelle temporelle apparaissent à intervalles réguliers des créneaux de synchronisation S.

La figure 3 montre de façon schématique le signal multiplexé selon l'invention. Dans ce signal il y a alternance des créneaux de phonie et de données mais aucun créneau de synchronisation n'est prévu.

La figure 4 montre de façon plus précise le mode de fonctionnement du procédé selon l'invention.

Selon une caractéristique de l'invention chaque utilisateur reste silencieux lorsqu'il n'a rien à émettre. La discrétion du dispositif est donc assurée. Aucun créneau de synchronisation n'est transmis de façon périodique par les postes en veille.

Selon une caractéristique essentielle de l'invention, lorsqu'un utilisateur souhaite émettre de la phonie ou des données, il reste tout d'abord à l'écoute du réseau pendant une durée minimale L. Cette durée est destinée à permettre de détecter la présence d'un créneau de phonie (V) ou de données (D) émis par un autre utilisateur.

La durée de l'intervalle L est de l'ordre de 500 ms (au moins la largeur de l'intervalle de silence S).

Ainsi sur la figure 4, l'utilisateur U₁ ne commence à émettre des données (D) qu'après la durée d'écoute L et uniquement si aucun signal n'a été détecté sur le réseau pendant cette durée L (la flèche L est interrompue pour des contraintes de représentation graphique, la durée L est cependant supérieure à la durée S).

Les données D émises sont séparées par des intervalles de silence S dont la durée est programmée dans tous les dispositifs de transmission des différents utilisateurs (au niveau de la mémoire 16).

Lorsque l'utilisateur U₂ souhaite émettre de la phonie (V) il reste lui aussi à l'écoute pendant en principe la durée L. Il détecte alors la présence d'un trafic de données D sur le réseau.

Il peut alors détecter le front descendant 9 d'un créneau 7 émis par U₁.

En effet chaque créneau (de phonie ou de données) comprend plusieurs parties : la partie initiale 6 correspond à l'émission de la porteuse du signal, sa durée est de l'ordre de 120 millisecondes.

La partie médiane 7 a une durée fixe de l'ordre de 200 millisecondes. Elle correspond à l'émission effective E de données ou de phonie sur le créneau considéré. La partie finale 8 du créneau a enfin une largeur fixe de l'ordre de 220 millisecondes.

Sur la figure 4, la ligne inférieure montre le signal reçu au niveau d'un autre utilisateur U₂. L'électronique interne du boîtier 3 de cet utilisateur détecte le front montant 10 du créneau D₁ reçu et elle se place en état de réception. L'intervalle δt a une largeur comprise entre 80 et 120 millisecondes. C'est l'intervalle temporel nécessaire pour que l'électronique de U₂ soit réceptrice. La partie 7 du créneau de données est ensuite reçue et restituée à l'utilisateur U₂ (créneau de réception R).

L'électronique du boîtier 3 de l'utilisateur U₂ détecte enfin le front descendant 9 du premier créneau de données D₁. C'est cette détection qui permet d'une façon préférée d'assurer la synchronisation (Top) des signaux entre U₁ et U₂ (il en est bien entendu de même pour les autres utilisateurs recevant le signal émis par U₁).

L'utilisateur U₂ (ainsi que les autres utilisateurs) va utiliser cette détection du front descendant 9 pour synchroniser temporellement ses futures émissions. L'utilisateur U2 ayant détecté une émission lors de sa phase d'écoute, il n'est pas nécessaire qu'il attende la fin d'une période L complète pour commencer lui-même à émettre. Il lui suffit de détecter le front descendant 9 qui assure la synchronisation. Il peut alors émettre dans la période de silence S qui suit ce front descendant à la condition qu'il n'y ait pas déjà un trafic de phonie en cours dans cette période de silence. Pour vérifier cela il lui suffit de rester à l'écoute après le front descendant 9 pendant la période I+δt pour vérifier que le créneau S est effectivement libre. Les valeurs I et δt sont des valeurs calculées ou connues et mises en mémoire dans le calculateur 11.

Il serait possible également d'assurer la synchronisation à partir du front montant 10, il est cependant préférable d'utiliser le front descendant 9 car il permet de maîtriser d'une façon plus fiable la localisation temporelle des intervalles de silence S de chaque émission.

Lorsqu'on réalise une synchronisation à partir de la détection du créneau montant 10, la valeur de δt variant dans le temps entre une valeur minimale et une valeur maximale connues, la synchronisation précise est maîtrisée au fil des créneaux reçus par le calcul d'une moyenne des mesures successives des intervalles δt.

On notera que tous les créneaux émis par l'utilisateur U₁ sont vus par l'utilisateur U₂ décalés de l'intervalle δt par rapport aux créneaux émis par l'utilisateur U₁. Cela ne pose pas de problème pour assurer la synchronisation, le boîtier 3 de chaque utilisateur maîtrisant la valeur de la durée de l'intervalle δt qui est mesurée à la détection du front descendant 9. La valeur moyenne de δt peut ainsi être calculée sur la base de plusieurs créneaux successifs.

L'utilisateur U₂ peut donc utiliser les créneaux de silence S (dont la valeur est connue de tous les utilisateurs et programmée dans leurs mémoires 16) pour émettre des données de phonie V. Les créneaux de phonie seront définis avec une largeur inférieure à celle des créneaux de silence S. Des inter créneaux I de l'ordre de 200 ms seront prévus entre les créneaux de phonie V et de données D de chaque utilisateur. Les valeurs des inter créneaux I seront bien entendu des valeurs communes à tous les utilisateurs et mémorisées dans une mémoire 17 du dispositif.

On a représenté sur la figure 4 par des pointillés les créneaux reçus de U₁ par l'utilisateur U₂. Pour la clarté de la figure on n'a pas représenté les créneaux de voix reçus par U₁ de la part de U₂ (et positionnés dans les intervalles S).

Bien entendu l'utilisateur U₂ qui reçoit les données émises par U₁ au cours du créneau D stockera ces informations en mémoire pour exploitation au niveau de son terminal de traitement et de mise en forme de données 5.

La synchronisation pourra bien entendu se répéter plusieurs fois au cours d'une même transaction entre utilisateurs.

On a représenté sur la figure 4 un échange qui débute par des émissions de données D par l'utilisateur U₁. Il serait bien entendu possible de débuter un échange par des émissions de phonie V. Dans ce cas, d'une façon tout à fait analogue, les créneaux de phonie V émis par U₁ seront séparés par des créneaux de silence S qui pourront être utilisés par les autres utilisateurs pour émettre des données D.

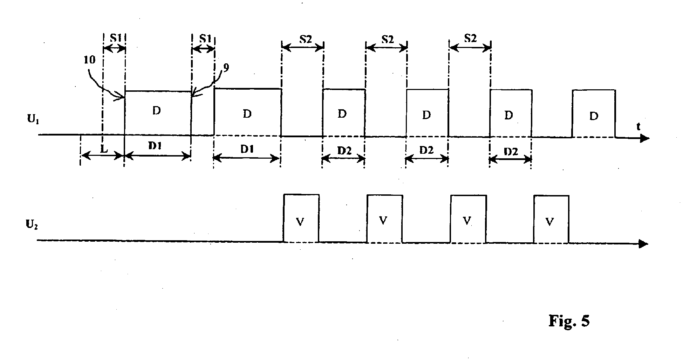

La figure 5 schématise un autre mode de réalisation de l'invention.

On voit que l'utilisateur U₁ a pris la ligne pour diffuser des données D. Cet utilisateur occupe pour la première fois le réseau après une période de silence.

En effet aucun trafic n'a été détecté pendant la période L précédant l'émission des créneaux D (L est supérieure à la valeur maximale des silences : S2).

Suivant ce mode de réalisation, les créneaux de données D1 qui sont émis lorsque aucun autre utilisateur n'émet de phonie sont plus larges que les créneaux de données D2 qu'il émet après détection d'une émission de phonie V par un autre utilisateur U₂. Les créneaux D1 "mordent" ainsi sur la fin des créneaux théoriques de phonie V si ceux ci sont absents, et de ce fait, le silence de détection S1 qui est adopté est plus court.

On a en effet modifié les algorithmes mis en oeuvre au niveau de chaque calculateur 11 pour que le premier utilisateur puisse augmenter la largeur des créneaux de données lorsqu'il n'y a pas d'émission de phonie détectée pendant la durée L. Ce choix est bien entendu automatique et une largeur importante D1 est automatiquement adoptée lorsque l'utilisateur prend la ligne à l'issue d'une période de silence L sur le réseau. En revanche, la durée globale des créneaux de phonie et de données est constante, c'est à dire que D1 + S1 = D2 + S2 (D2 et S2 étant les durées respectives des créneaux de données et de silence qui sont adoptés lorsqu'il y a un trafic de phonie).

Par ailleurs lorsqu'un utilisateur détecte un trafic au cours de sa période initiale d'écoute, il n'attendra bien entendu pas la fin de la période L pour commencer à émettre de la phonie (ou des données) dans les créneaux dédiés. Une fois une émission en cours détectée, l'utilisateur deuxième se synchronise sur cette émission en cours et il émet (de la phonie ou des données suivant le type d'émission qui est disponible) au cours des créneaux de silence qu'il détecte à l'issue des créneaux déjà occupés. La période maximale d'attente L (supérieure à la valeur maximale S2 des silences) n'est effectivement mise en oeuvre que lors de l'ouverture d'une nouvelle émission après une période de silence complet.

Un tel mode de réalisation permet d'augmenter la bande passante, notamment pour les émissions de données lorsqu'il n'y a pas de phonie. Il est possible ainsi de donner à D1 une valeur de 30% à 50% supérieure à celle de D2 ce qui accroît la bande passante dans les même proportions.

On voit sur la figure 5 que, lorsque l'utilisateur U₂ prend la ligne pour émettre de la phonie V dans les intervalles de silence S1 qui lui sont laissés par U₁, l'utilisateur U₁ ramène la largeur de ses émissions de données à une largeur D2 qui est inférieure à D1 et les intervalles de silence ont alors une largeur S2.

Ce retour de S1 à S2 est rendu possible car les créneaux de données D1 se sont allongés en mordant sur le créneau de phonie qui précède l'émission des données. L'utilisateur qui émet des données D1 reste donc toujours à l'écoute des trafics de phonie éventuels au cours des silences S1. Une absence de trafic de phonie le conduit à maintenir la largeur de données maximale D1. L'apparition d'un trafic de phonie au cours de S1 conduit l'utilisateur à retarder ses propres émissions de données ce qui ramène la configuration de son émission de données à une largeur optimale D2 (et les intervalles de silence à la valeur S2 permettant la transmission de la phonie).

Cette largeur D2 sera choisie lors du paramétrage des dispositifs comme une largeur optimale des créneaux de données. Cette largeur optimale est choisie de façon à ne pas créer trop de décalages temporels lors des émissions de phonie. Une largeur optimale D2 est de l'ordre de 500 ms.

Les algorithmes incorporés dans tous les calculateurs comprendront une boucle permettant de réduire les largeurs des créneaux d'émission de D1 à D2 lorsqu'une émission de phonie sera détectée dans les intervalles de silence S1.

On assure ainsi un bon compromis entre une bande passante large pour le transfert des données en l'absence de trafic phonie et la possibilité néanmoins d'insérer de la phonie entre les créneaux de données.

## Revendications

1. Procédé de transmission de phonie et de données entre plusieurs utilisateurs (Uᵢ) au travers d'un réseau de télécommunications radio en "half duplex", procédé dans lequel on multiplexe temporellement la phonie (V) et les données (D) sous la forme d'une trame alternant des créneaux temporels dédiés à la transmission de la phonie et des créneaux temporels dédiés à la transmission des données, procédé ***caractérisé en ce que*** chaque utilisateur (Uᵢ) reste silencieux lorsqu'il n'a rien à émettre, et **en ce que** lorsqu'un utilisateur (Uᵢ) souhaite émettre de la phonie (V) ou des données (D), il reste tout d'abord à l'écoute du réseau pendant une durée minimale (L) pour détecter la présence d'un créneau de phonie ou de données émis par un autre utilisateur, puis il synchronise temporellement ses futures émissions à partir de la détection du front montant (10) ou descendant (9) d'un créneau ainsi reçu d'un autre utilisateur.

2. Procédé de transmission selon la revendication 1, **caractérisé en ce que** chaque utilisateur (Uᵢ), lorsqu'il émet de la phonie (V) (respectivement des données (D)), réalise son émission sous la forme d'une série de créneaux séparés par des silences (S1,S2) de largeur prédéfinie permettant ainsi à un autre utilisateur (Uᵢ) d'émettre au cours de ces silences des données (respectivement de la phonie).

3. Procédé de transmission selon la revendication 2, **caractérisé en ce que** chaque utilisateur (Uᵢ) qui occupe pour la première fois le réseau après une période de silence choisit la largeur des créneaux (D1) de son émission de données, la somme de la durée du silence (S1,S2) et de la durée du créneau de donnée (D1,D2) qui suit le silence (S1,S2) conservant par ailleurs toujours une valeur constante.

4. Procédé de transmission selon la revendication 3, **caractérisé en ce qu'**on définit au préalable une largeur de créneau optimale (D2) pour les données, et lorsque l'utilisateur (Uᵢ) qui occupe pour la première fois le réseau après une période de silence émet des données suivant une largeur de créneau (D1) supérieure à la largeur optimale (D2), il ramène par la suite la largeur de ses émissions de données à la largeur optimale (D2) lorsqu'il détecte une émission de phonie (V) dans les silences (S1) précédant ses émissions de données.

5. Dispositif de transmission de phonie et de données entre plusieurs utilisateurs (Uᵢ) au travers d'un réseau de télécommunications radio, dispositif mettant en oeuvre le procédé selon une des revendications précédentes et comprenant au moins un poste de radio (2) au niveau de chaque utilisateur (Uᵢ) ainsi qu'une interface de communication par phonie (4) et un terminal de traitement de données (5), dispositif ***caractérisé en ce qu*'**il comporte un boîtier interface de multiplexage (3) qui est interposé au niveau de chaque utilisateur (Uᵢ) entre le poste de radio (2) d'une part et l'interface de communication (4) et le terminal (5) d'autre part, boîtier interface (3) assurant un multiplexage temporel des données (D) et de la phonie (V) sous la forme d'une trame alternant des créneaux temporels dédiés à la transmission de la phonie et des créneaux temporels dédiés à la transmission des données, multiplexage assurant une émission de phonie (respectivement de données) sous la forme d'une série de créneaux séparés par des silences de largeur prédéfinie (S1, S2) permettant ainsi à un autre utilisateur (Uᵢ) d'émettre au cours de ces silences des données (respectivement de la phonie), des moyens étant par ailleurs prévus pour synchroniser temporellement les émissions à partir de la détection du front montant (10) ou descendant (9) d'un créneau reçu d'un autre utilisateur (Uᵢ).

## Claims

1. Process of voice and data transmission between several users (Uᵢ) via a half-duplex radio telecommunication network, process in which the voice (V) and data (D) are temporally multiplexed in the form of a frame alternating time slots dedicated to voice transmission and time slots dedicated to data transmission, process **characterised in that** each user (Uᵢ) remains silent when he has nothing to emit, and **in that** when a user (Uᵢ) wishes to emit voice (V) or data (D) he first listens to the network for a minimal duration (L) to detect the presence of a voice or data slot emitted by another user, then he time synchronises his future emissions from the detection of the leading (10) or trailing (9) edge of the slot thus received from another user.

2. Transmission process according to Claim 1, **characterised in that** each user (Uᵢ), when emitting voice (V) (respectively data (D)), emits in the form of a series of time slots separated by silences (S1, S2) of a predetermined length thereby enabling another user (Uᵢ) to emit data (respectively voice) during these silences.

3. Transmission process according to Claim 2, **characterised in that** each user (Uᵢ) occupying the network for the first time after a silent period chooses the length of the time slots (D1) for his data emission, the total duration of the silences (S1, S2) and the duration of the data time slot (D1, D2) following the silence (S1, S2) always maintaining a constant value.

4. Transmission process according to Claim 3, **characterised in that** an optimal time slot length (D2) is previously defined for the data, and when the user (Uᵢ) occupying the network for the first time after a period of silence emits data in a time slot (D1) of a length greater than the optimal length (D2), he thereafter returns his data emissions to the optimal length (D2) when he detects a voice emission (V) in the silences (S1) preceding his data emissions.

5. Voice and data transmission device between several users (Uᵢ) via a radio telecommunication network, device implementing the process according to one of the above Claims and comprising at least one radio set (2) for each user (Uᵢ) as well as a voice communication interface (4) and a data processing terminal (5), device **characterised in that** it incorporates a multiplexer interface box positioned for each user (Uᵢ) between the radio set (2) on the one hand and the communication interface (4) and the terminal (5) on the other, such interface box (3) ensuring the temporal multiplexing of the voice (V) and data (D) in the form of a frame alternating time slots dedicated to voice transmission and time slots dedicated to data transmission, such multiplexing ensuring voice emission (respectively data emission) in the form of a series of time slots separated by silences of predefined length (S1, S2) thereby enabling another user (Uᵢ) to emit data (respectively voice) during these silences, means being further provided to time synchronise these emissions after the detection of the leading (10) or trailing (9) pulse edge of the time slot received by another user (Uᵢ).

## Patentansprüche

1. Verfahren zur Übertragung von Sprechfunk und von Daten zwischen mehreren Benutzern (Uᵢ) über ein Radionetzwerk in "halb duplex", wobei in dem Verfahren der Sprechfunk (V) und die Daten (D) in der Form eines Datenblocks gemultiplext werden, indem temporäre Sendezeiten, die der Übertragung des Sprechfunks zugeordnet sind, und temporäre Sendezeiten, die der Übertragung der Daten zugeordnet sind, einander abwechseln, wobei das Verfahren ***dadurch gekennzeichnet ist, dass*** jeder Benutzer (Uᵢ) stumm bleibt, wenn er nichts auszusenden hat und dass, wenn ein Benutzer (Uᵢ) Sprechfunk (V) oder Daten (D) auszusenden wünscht, er zunächst auf Empfang des Netzes für eine minimale Dauer (L) verbleibt, um die Anwesenheit einer Sendezeit von Sprechfunk oder Daten zu detektieren, die von einem anderen Benutzer ausgesendet wird, er dann temporär seine zukünftigen Aussendungen ausgehend von der Detektierung der ansteigenden (10) oder fallenden (9) Front einer so empfangenen Sendezeit eines anderen Benutzers synchronisiert.

2. Übertragungsverfahren nach Anspruch 1, **dadurch gekennzeichnet, dass** jeder Benutzer (Uᵢ), wenn er Sprechfunk (V) (respektive Daten (D)) aussendet, seine Aussendung in der Form einer Reihe von Sendezeiten ausführt, die durch Pausen (S1, S2) von vordefinierter Breite getrennt sind, die es so einem anderen Benutzer (Uᵢ) ermöglichen, im Verlauf dieser Pausen Daten (respektive Sprechfunk) auszusenden.

3. Übertragungsverfahren nach Anspruch 2, **dadurch gekennzeichnet, dass** jeder Benutzer (Uᵢ), der das erste Mal das Netz nach einer Pausenperiode belegt, die Breite der Sendezeiten (D1) seiner Aussendung von Daten, die Summe der Dauer der Pause (S1, S2) und der Dauer der Datensendezeit (D1, D2), die der Pause (S1, S2) folgt, auswählt, wobei er im Übrigen immer einen konstanten Wert behält.

4. Übertragungsverfahren nach Anspruch 3, **dadurch gekennzeichnet, dass** zuvor eine optimale Sendezeitbreite (D2) für die Daten definiert wird, und, wenn der Benutzer (Uᵢ), der das Netz nach einer Pausenperiode zum ersten Mal belegt, Daten gemäß einer Sendezeitbreite (D1), die größer als die optimale Breite (D2) ist, aussendet, er in der Folge die Breite seiner Datenaussendungen auf die optimale Breite (D2) vermindert, wenn er eine Sprechfunkaussendung (V) in den Pausen (S1) detektiert, die seinen Datenaussendungen vorangehen.

5. Vorrichtung zur Übertragung von Sprechfunk und von Daten zwischen mehreren Benutzern (Uᵢ) über ein Radionetzwerk, wobei die Vorrichtung das Verfahren nach einem der vorhergehenden Ansprüche einsetzt und wenigstens ein Radiogerät (2) im Bereich eines jeden Benutzers (Uᵢ) sowie eine Schnittstelle (4) zur Sprechfunkkommunikation und ein Terminal (5) zur Verarbeitung von Daten umfasst, wobei die Vorrichtung ***dadurch gekennzeichnet ist, dass*** sie ein Schnittstellengehäuse (3) zum Multiplexbetrieb umfasst, das im Bereich eines jeden Benutzers (Uᵢ) zwischen dem Radiogerät (2) einerseits und der Schnittstelle zur Kommunikation (4) und dem Terminal (5) andererseits eingefügt ist, wobei das Schnittstellengehäuse (3) einen temporären Multiplexbetrieb der Daten (D) und des Sprechfunks (V) in der Form eines Datenblocks gewährleistet, indem temporäre Sendezeiten, die der Übertragung des Sprechfunks zugeordnet sind, und temporäre Sendezeiten, die der Übertragung der Daten zugeordnet sind, einander abwechseln, wobei der Multiplexbetrieb eine Aussendung von Sprechfunk (respektive von Daten) in der Form einer Reihe von Sendezeiten gewährleistet, die durch Pausen (S1, S2) von vordefinierter Breite getrennt sind, die es so einem anderen Benutzer (Uᵢ) ermöglichen, im Verlauf dieser Pausen Daten (respektive Sprechfunk) auszusenden, wobei im Übrigen Mittel vorgesehen sind, um temporär die Aussendungen ausgehend von der Detektierung der ansteigenden (10) oder fallenden (9) Front einer empfangenen Sendezeit eines anderen Benutzers (Uᵢ) zu synchronisieren.
